(19) Europäisches Patentamt / European Patent Office / Office européen des brevets

(11) **EP 2 609 545 B1**

(12) **FASCICULE DE BREVET EUROPEEN**

(45) Date de publication et mention
de la délivrance du brevet:
**08.10.2014 Bulletin 2014/41**

(21) Numéro de dépôt: **11748654.8**

(22) Date de dépôt: **25.08.2011**

(51) Int Cl.:
***G06N 3/04*** *(2006.01)*

(86) Numéro de dépôt international:
**PCT/EP2011/064605**

(87) Numéro de publication internationale:
**WO 2012/025583 (01.03.2012 Gazette 2012/09)**

(54) **DISPOSITIFS D'APPRENTISSAGE ET/OU DE DÉCODAGE DE MESSAGES, METTANT EN OEUVRE UN RÉSEAU DE NEURONES, PROCÉDÉS D'APPRENTISSAGE ET DE DÉCODAGE ET PROGRAMMES D'ORDINATEUR CORRESPONDANTS**

VORRICHTUNGEN ZUM LERNEN UND/ODER ENTSCHLÜSSELN VON NACHRICHTEN ANHAND EINES NEURONALEN NETZWERKES, LERN- UND ENTSCHLÜSSELUNGSVERFAHREN SOWIE ZUGEHÖRIGE COMPUTERPROGRAMME

DEVICES FOR LEARNING AND/OR DECODING MESSAGES USING A NEURAL NETWORK, LEARNING AND DECODING METHODS, AND CORRESPONDING COMPUTER PROGRAMS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.08.2010 FR 1056760**

(43) Date de publication de la demande:
**03.07.2013 Bulletin 2013/27**

(73) Titulaire: **Institut Télécom - Télécom Bretagne
29238 Brest Cedex 3 (FR)**

(72) Inventeurs:
• **BERROU, Claude
F-29280 Locmaria Plouzane (FR)**
• **GRIPON, Vincent
F-29200 Brest (FR)**

(74) Mandataire: **Windal-Vercasson, Gaelle I.M.
CABINET VIDON
Technopôle Atalante
16B Rue de Jouanet - BP
35703 Rennes Cedex 7 (FR)**

(56) Documents cités:
• **D. SHEN, J. B. CRUZ: "Encoding strategy for maximum noise tolerance bidirectional associative memory", IEEE TRANSACTIONS ON NEURAL NETWORKS, vol. 16, no. 2, mars 2005 (2005-03), pages 293-300, XP011127670, DOI: 10.1109/TNN.2004.841793**
• **Z. ZHAO, X. WU, J. YANG: "A class of turbo-like LDPC codes and their decoding based on neural network", PROCEEDINGS OF THE IEEE INTERNATIONAL SYMPOSIUM ON MICROWAVE, ANTENNA, PROPAGATION AND EMC TECHNOLOGIES FOR WIRELESS COMMUNICATIONS (MAPE'05), vol. 2, 8 août 2005 (2005-08-08), pages 961-965, XP010909149, DOI: 10.1109/MAPE.2005.1618080**
• **V. GARDASEVIC, R. R. MUELLER, G. E. OIEN: "Hopfield neural networks for vector precoding", PROCEEDINGS OF THE 2010 INTERNATIONAL ZURICH SEMINAR ON COMMUNICATIONS (IZS'10), 3 mars 2010 (2010-03-03), pages 66-69, XP055007599, DOI: 10.3929/ethz-a-006000870**
• **D. J. LOUW, P. R. BOTHA, B. T. MAHARAJ: "A low complexity soft-input soft-output MIMO detector which combines a Sphere Decoder with a Hopfield network", PROCEEDINGS OF THE 15TH IEEE MEDITERRANEAN ELECTROTECHNICAL CONFERENCE (MELECON'10), 26 avril 2010 (2010-04-26), pages 521-526, XP031683536, DOI: 10.1109/MELCON.2010.5476215**

- C. BERROU: "Génération de séquences quasi-orthogonales par des réseaux de neurones", PROPOSITIONS DE THÈSE DANS LE CADRE DU PROGRAMME "FUTUR ET RUPTURE", mars 2010 (2010-03), XP007917878,
- Anonymous: "Invited speakers abstracts", Homepage of the 5th International Symposium on Turbo Codes and Iterative Information Processing (ISTC'10), 21 août 2010 (2010-08-21), XP055007532, Extrait de l'Internet: URL:http://web.archive.org/web/20100821044 559/http://conferences.telecom-bretagne.eu /turbocodes/invited_speakers/ [extrait le 2011-03-28]
- A. H. Salavati: "My notes on 'Coded Hopfield networks' (paper)", , 27 août 2010 (2010-08-27), XP055007528, Extrait de l'Internet: URL:http://dl.dropbox.com/u/369795/Researc h/Error Correction in Neuronal Systems/Coded Hopfield Networks.mht [extrait le 2011-03-28]
- V. GRIPON, C. BERROU: "A simple and efficient way to store many messages using neural cliques", PROCEEDINGS OF THE 2011 IEEE SYMPOSIUM ON COMPUTATIONAL INTELLIGENCE, COGNITIVE ALGORITHMS, MIND, AND BRAIN (CCMB'11), 11 avril 2011 (2011-04-11), XP031893505, DOI: 10.1109/CCMB. 2011.5952106

**Description**

**1. domaine de l'invention**

Le domaine de l'invention est celui des réseaux de neurones. Plus précisément, l'invention concerne la mise en oeuvre de réseaux de neurones, et en particulier l'apprentissage de tels réseaux et le décodage à l'aide de tels réseaux, notamment pour la reconnaissance de messages ou la discrimination entre messages appris et messages non appris.

**2. art antérieur**

En mars 2010, Claude Berrou décrivit une proposition de thèse sur la génération de séquences quasi-orthogonales par des réseaux de neurones (programme « futur et rupture », XP007917878). Afin d'augmenter la diversité d'apprentissage, les messages en entrée d'un réseau sont segmentés et à chaque segment est associé, par un petit réseau bipartite, un jeu de mots de Walsh-Hadamard (orthogonaux). Les valeurs binaires contenues dans la concaténation des mots de Walsh-Hadamard sont reliées à des mots de codes binaires aléatoires par un dernier réseau bipartite. La proposition de thèse renvoie, entre autres, à la simulation de réseaux de neurones bipartites ternaires et tirés aléatoirement, ainsi qu'à la remise en cause de la plausibilité des réseaux de Hopfield classiques ou codés.

Dans un abrégé (extrait de l'Internet : http://web.archive.org/web/20100821044559/http://conferences.telecom-bretagne.eu/turbocodes/invited_speakers/, XP055007532), Claude Berrou et Vincent Gripon décrivirent un réseau de Hopfield codé par l'introduction de codes correcteurs d'erreurs, utilisant notamment des graphes bipartites et de codes orthogonaux ou quasi-orthogonaux.

*2.1 intelligence artificielle*

Depuis un demi-siècle, précisément depuis la fameuse conférence de Dartmouth en 1956 organisée à l'initiative de John McCarthy, l'intelligence artificielle et ses applications potentielles suscitent l'intérêt de nombreux scientifiques. Cependant, à part quelques succès modestes de réalisation matérielle (réseaux de neurones formels, réseaux de Hopfield, perceptrons, logique floue, automates évolués), l'ambition de l'intelligence artificielle s'est essentiellement reportée sur la conception de systèmes dits experts, c'est-à-dire de logiciels capables de reproduire des décisions qu'un expert humain pourrait prendre sur un problème limité, avec un jeu de critères restreint et dans un contexte bien circonscrit.

Et l'expression "intelligence artificielle" s'est démodée au profit de celle de "sciences cognitives", dont l'outil principal reste le classique ordinateur, dont l'architecture et le fonctionnement sont, comme chacun le sait, très éloignés de ceux du cerveau. Malgré tous les efforts accomplis ces vingt dernières années dans l'exploration du réseau neural biologique, grâce à des procédés de plus en plus sophistiqués (électro-encéphalographie, imagerie par résonance magnétique, ...), le cerveau reste, du point de vue du traitement de l'information, *terra incognita.*

*2.2 réseau de Hopfield*

Le codage dans les réseaux de neurones peut notamment être abordé par le biais des mémoires associatives de Hopfield (voir par exemple : John J. Hopfield (2007) Hopfield network. Scholarpedia, 2(5):1977), lesquelles sont très simples à construire et constituent une référence du domaine.

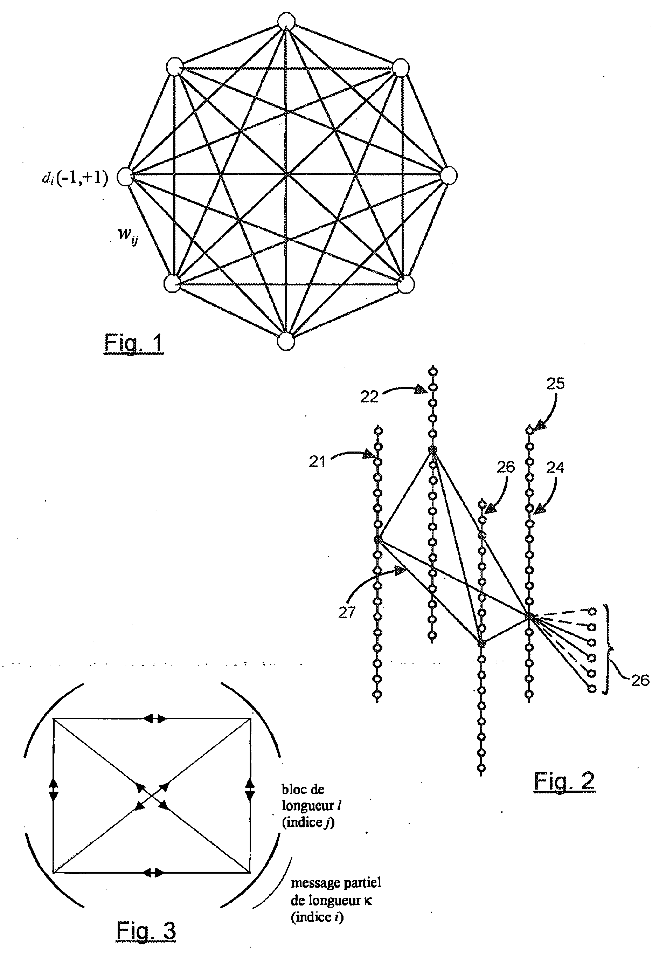

Un réseau de Hopfield, dont un exemple est donné en figure 1 (cas d'un réseau de Hopfield classique à $n = 8$ neurones), est porté par un graphe non orienté complet à n sommets (neurones) et sans boucles. Le graphe comporte

donc $\dfrac{n(n-1)}{2} = 28$ liaisons et la liaison bidirectionnelle entre les sommets i et $j$ est caractérisée par un poids (synaptique) $w_{ij}$. Ce poids résulte de l'apprentissage de $M$ messages de $n$ valeurs binaires antipodales ($\pm$ 1), chaque valeur $d_i^m$ ($i = 1...n$) du $m^{\text{ième}}$ message (m = 1...$M$) correspondant à une même valeur du $i^{\text{ème}}$ neurone. $w_{ij}$ est donné par :

$$w_{ij} = \frac{1}{M} \sum_{\substack{m=1 \\ i \neq j}}^{M} d_i^m d_j^m \qquad (1)$$

et peut prendre P = $M$+ 1 valeurs.

La remémoration d'un message particulier, à partir d'une partie de son contenu, s'effectue à travers le processus itératif décrit par les relations suivantes, où $v_i^p$ est la valeur de sortie du $i^{\text{ème}}$ neurone après la $p^{\text{ième}}$ itération :

$$v_i^p = +1 \quad \text{si} \quad \sum_{\substack{j=1 \\ j \neq i}}^{n} w_{ij} v_j^{p-1} \geq 0$$

$$(2)$$

$$v_i^p = -1 \quad \text{si} \quad \sum_{\substack{j=1 \\ j \neq i}}^{n} w_{ij} v_j^{p-1} < 0$$

### 3. inconvénients de **l'art** antérieur

Une borne supérieure de la diversité d'apprentissage et de remémoration sans erreurs d'une telle machine est :

$$M_{\max} = \frac{n}{\log(n)} \qquad (3)$$

(logarithme naturel)

où $M_{max}$ est le nombre de motifs indépendants de $n$ bits que le réseau de neurones peut apprendre, comme expliqué par R. J. McEliece, E. C. Posner, E. R. Rodemich, and S. S. Venkatesh, dans "The capacity of the Hopfield associative memory," IEEE Trans. Inform. Theory, vol. IT-33, pp. 461-482, 1987.

Cette borne $M_{\max}$ est relativement faible, et limite l'intérêt des réseaux de Hopfield et leurs applications. Par exemple, avec 1900 neurones, et donc $1{,}8{.}10^6$ connexions binaires, un réseau de Hopfield est capable d'acquérir et de se remémorer uniquement environ 250 messages de 1900 bits.

### 4. objectifs de l'invention

L'invention a notamment pour objectif de pallier ces inconvénients de l'état de l'art.

Plus précisément, un objectif de l'invention est de fournir, selon au moins un mode de réalisation, une technique permettant d'augmenter simplement et efficacement la diversité d'apprentissage d'un réseau de neurones.

Un autre objectif de l'invention, selon au moins un mode de réalisation, est de fournir une telle technique, offrant un pouvoir de remémoration élevé, notamment en présence d'effacement.

L'invention a également pour objectif, selon au moins un mode de réalisation, de fournir une telle technique, présentant une grande capacité de discrimination, entre des messages valides (appris) et des messages non valides.

### 5. caractéristiques principales de l'invention

Ces objectifs, ainsi que d'autres qui apparaîtront par la suite, sont atteints à l'aide : d'un dispositif d'apprentissage de messages, mettant en oeuvre un réseau de neurones binaires, selon la revendication indépendante 1 ; d'un dispositif de décodage d'un message à décoder, à l'aide d'un réseau de neurones binaires configuré à l'aide dudit dispositif d'apprentissage, selon la revendication indépendante 4 ; d'un procédé d'apprentissage de messages, mettant en oeuvre un réseau de neurones binaires, selon la revendication indépendante 12 ; d'un procédé de décodage d'un message à décoder, à l'aide d'un réseau de neurones binaires configuré selon ledit procédé d'apprentissage, selon la revendication indépendante 15 ; et de produits programmes d'ordinateur, selon les revendications indépendantes 14 et 22, comprenant chacun des instructions de code de programme pour l'exécution respective desdits procédés d'apprentissage et de décodage, lorsqu'ils sont exécutés sur un ordinateur.

Le dispositif d'apprentissage de messages comprend un ensemble de neurones, dits fanaux, lesdits fanaux étant des neurones binaires, pouvant prendre uniquement deux états, un état allumé et un état éteint, lesdits fanaux étant distribués en blocs comprenant chacun un nombre prédéterminé de fanaux, chaque bloc de fanaux étant affecté au traitement d'un sous-message,

chaque fanal étant associé à une occurrence spécifique dudit sous-message,

et des moyens d'apprentissage dudit réseau de neurones, comprenant :

- des moyens de découpage d'un message à apprendre en B sous-messages à apprendre, B supérieur ou égal à deux ;
- des moyens d'activation d'un unique fanal dans l'état allumé dans chaque bloc, pour un sous-message à apprendre, tous les autres fanaux dudit bloc étant dans l'état éteint ;
- des moyens de création de connexions entre fanaux, activant, pour un message à apprendre, des connexions entre les fanaux allumés de chacun desdits blocs, lesdites connexions étant des connexions binaires, pouvant prendre uniquement un état connecté et un état déconnecté.

Ainsi, l'invention repose notamment sur un apprentissage parcimonieux, seul un fanal par bloc pouvant être allumé pour chaque message à apprendre, simplifiant les traitements et offrant une forte capacité de mémorisation. L'apprentissage et le décodage sont alors très simples, et fiables, puisque l'on sait que, dans chaque bloc, un seul fanal est allumé, pour un message donné.

Le traitement est également simplifié, par rapport aux réseaux de neurones à valeurs réelles, ou pondérées, du fait qu'il repose sur une approche binaire : d'une part, les fanaux sont des neurones binaires, pouvant prendre uniquement deux états, et d'autre part, les connexions entre les fanaux allumés sont également, des connexions binaires, pouvant prendre uniquement un état connecté et un état déconnecté.

Selon au moins un mode de réalisation, lesdits messages présentent une longueur $k = B\kappa$, où $B$ est le nombre de blocs, et $\kappa$ la longueur d'un sous-message, chaque bloc comprenant $l = 2^\kappa$ fanaux.

Les messages peuvent être des messages binaires, constitués d'un ensemble de bits. Il peut aussi s'agir de messages constitués de symboles appartenant à un alphabet fini prédéterminé. Dans ce cas, le nombre $l$ de fanaux de chaque bloc correspond (au minimum) au nombre de symboles de cet alphabet.

Un tel dispositif d'apprentissage peut notamment être réalisé sous la forme d'au moins un circuit intégré et/ou être implanté sous forme logicielle, dans un appareil, tel qu'un ordinateur, comprenant des moyens de stockage de données et des moyens de traitement de données.

Le dispositif de décodage d'un message à décoder, à l'aide d'un réseau de neurones configuré à l'aide du dispositif d'apprentissage décrit ci-dessus, comprend :

- des moyens de découpage du message à décoder en B sous-messages à décoder ;
- des moyens d'allumage de fanaux associés respectivement auxdits sous-messages à décoder, dans les blocs correspondants ;
- des moyens d'association, audit message à décoder, d'un message décodé, en fonction desdits fanaux allumés.

Il est à noter que les dispositifs d'apprentissage et de décodage peuvent être des dispositifs distincts (physiquement ou du fait de leur implémentation logicielle) ou être regroupés dans un dispositif unique d'apprentissage et de décodage.

Selon un aspect particulier de l'invention, lesdits moyens d'association peuvent mettre en oeuvre un décodage à maximum de vraisemblance.

Cette approche, connue dans le domaine des technologies de l'information, permet d'obtenir de bons résultats de décodage, en combinaison avec le codage parcimonieux proposé.

Ainsi, lesdits moyens de décodage peuvent comprendre des moyens de décodage local, pour chacun desdits blocs, activant dans l'état allumé au moins un fanal le plus vraisemblable, dans ledit bloc, en fonction du sous-message à décoder correspondant, et délivrant un sous-message décodé en fonction des connexions activées entre lesdits fanaux dans l'état allumé.

Lesdits moyens de décodage peuvent également comprendre des moyens de décodage global, assurant une fonction de passage de message, en tenant compte de l'ensemble des fanaux dans l'état allumé.

Dans ce cas notamment, lesdits moyens de décodage peuvent mettre en oeuvre un décodage itératif, assurant au moins deux itérations du traitement effectué par lesdits moyens de décodage local.

Selon un autre aspect particulier d'au moins un mode de réalisation, lesdits moyens d'association mettent en oeuvre des neurones de traitement, organisés de façon à déterminer la valeur maximum d'au moins deux valeurs soumises en entrée.

On dispose ainsi d'une implémentation neurale, qui peut par exemple être mise en oeuvre sous la forme d'au moins un module de base constitué de six neurones à seuil nul et à valeurs de sortie 0 ou 1, comprenant :

- un premier neurone apte à recevoir une première valeur A ;
- un deuxième neurone apte à recevoir une seconde valeur B, au moins l'une desdites première valeur A et seconde valeur B étant positive ou nulle ;
- un troisième neurone, connecté au premier neurone par une connexion de poids 0,5 et au deuxième neurone par une connexion de poids 0,5 ;
- un quatrième neurone, connecté au premier neurone par une connexion de poids 0,5 et au deuxième neurone par une connexion de poids - 0,5 ;

- un cinquième neurone, connecté au premier neurone par une connexion de poids -0,5 et au deuxième neurone par une connexion de poids 0,5 ;
- un sixième neurone, connecté aux troisième, quatrième et cinquième neurones par des connexions de poids 1, et délivrant la valeur maximum entre les valeurs A et B.

Un tel dispositif de décodage peut notamment être réalisé sous la forme d'au moins un circuit intégré. Il peut également être un, ou être implanté en tout ou partie dans, un ordinateur, ou plus généralement dans un appareil comprenant des moyens de stockage de données et des moyens de traitement de données.

Le procédé d'apprentissage de messages met en oeuvre un ensemble de neurones, dits fanaux, lesdits fanaux sont des neurones binaires, pouvant prendre uniquement deux états, un état allumé et un état éteint, lesdits fanaux étant distribués en blocs comprenant chacun un nombre prédéterminé de fanaux, chaque bloc de fanaux étant affecté au traitement d'un sous-message, chaque fanal étant associé à une occurrence spécifique dudit sous-message.

Ce procédé d'apprentissage comprend une phase d'apprentissage comprenant les étapes suivantes, pour un message à apprendre :

- une étape de découpage d'un message à apprendre en B sous-messages à apprendre, B supérieur ou égal à deux ;
- une étape d'activation d'un unique fanal dans l'état allumé dans chaque bloc, pour un sous-message à apprendre, tous les autres fanaux dudit bloc étant dans l'état éteint ;
- une étape de création de connexions entre fanaux, activant, pour un message à apprendre, des connexions entre les fanaux allumés de chacun desdits blocs, lesdites connexions étant des connexions binaires, pouvant prendre uniquement un état connecté et un état déconnecté.

Préférentiellement, une connexion entre deux fanaux possédant la valeur 1 conserve cette valeur. Comme déjà mentionné, on utilise donc que des valeurs binaires pour la mise en oeuvre de cet apprentissage.

Le produit programme d'ordinateur comprenant des instructions de code de programme pour l'exécution de ce procédé d'apprentissage, lorsqu'il est exécuté sur un ordinateur, est téléchargeable depuis un réseau de communication et/ou stocké sur un support lisible par ordinateur et/ou exécutable par un microprocesseur.

L'invention concerne encore un procédé de décodage d'un message à décoder, à l'aide d'un réseau de neurones configuré selon le procédé d'apprentissage tel que décrit ci-dessus, et comprenant les étapes suivantes :

(a) réception d'un message à décoder ;
(b) découpage dudit message à décoder en B sous-messages à décoder ;
(c) association, audit message à décoder, d'un message décodé, en fonction des fanaux allumés correspondant auxdits sous-messages à décoder.

Ladite étape (c) peut ainsi comprendre, pour chacun desdits sous-messages à décoder, et pour chaque bloc de fanaux correspondant, les sous-étapes de :

(cl) initialisation, par activation dans l'état allumé d'au moins un fanal correspondant au sous-message traité, et extinction de tous les autres fanaux dudit bloc ;
(c2) recherche d'au moins un fanal le plus vraisemblable, parmi l'ensemble des fanaux dudit bloc ;
(c3) activation dans l'état allumé dudit au moins un fanal le plus vraisemblable, et extinction de tous les autres fanaux dudit bloc ;

et une étape de :
(c4) détermination du message décodé correspondant au message à décoder, par combinaison des sous-messages désignés par les fanaux dans l'état allumé.

Lorsqu'une approche itérative est souhaitable, le procédé peut comprendre en outre une étape :

(d) de passage de messages entre les B blocs, adaptant les valeurs des fanaux pour une réintroduction dans l'étape (c2),

lesdites étapes (c2) à (c4) étant ensuite réitérées.

Dans ce cas, lors d'une réitération, l'étape (c2) peut tenir compte des informations délivrées par l'étape (c4) et des informations prises en compte lors d'au moins une itération précédente.

On introduit ainsi un effet mémoire.

Notamment, lesdites informations prises en compte lors d'au moins une itération précédente peuvent être pondérées à l'aide d'un coefficient d'effet mémoire $\gamma$.

Par ailleurs, selon un autre aspect, dans l'étape (c3), un fanal le plus vraisemblable peut, dans certains modes de réalisation, ne pas être activé si sa valeur est inférieure à un seuil prédéterminé $\sigma$.

Ce seuillage permet, si nécessaire, d'éviter l'allumage d'un fanal pour lequel le doute est fort (même s'il est le plus vraisemblable en théorie).

L'invention peut trouver de nombreuses applications, dans différents domaines. Ainsi, notamment, le décodage peut délivrer, pour un message à décoder:

- un message décodé correspondant au message à décoder, de façon à assurer une fonction de mémoire associative ; ou
- une information binaire, indiquant si le message à décoder est ou non un message déjà appris par ledit réseau de neurones, de façon à assurer une fonction de discriminateur.

Le produit programme d'ordinateur est téléchargeable depuis un réseau de communication et/ou stocké sur un support lisible par ordinateur et/ou exécutable par un microprocesseur. 1-5 comprenant des instructions de code de programme pour l'exécution de ce procédé de décodage, lorsqu'il est exécuté sur un ordinateur,

### 6. liste des figures

D'autres caractéristiques et avantages de l'invention apparaîtront plus clairement à la lecture de la description suivante d'un mode de réalisation préférentiel de l'invention, donné à titre de simple exemple illustratif et non limitatif, et des dessins annexés, parmi lesquels :

- la figure 1, commentée en préambule, présente un exemple d'un réseau de Hopfield à 8 neurones ;
- la figure 2 illustre le principe de la diversité d'apprentissage, dans un mode de réalisation simplifié mettant en oeuvre quatre blocs ;
- la figure 3 est une autre représentation d'un réseau à adressage réparti de quatre blocs ;
- la figure 4 présente un graphe biparti de décodage de quatre mots, ou sous-messages, à l'aide des réseaux des figures 2 ou 3 ;
- la figure 5 est un exemple de réalisation neurale de la fonction maximum de deux nombres dont l'un au moins est positif ou nul ;
- la figure 6 est un exemple de réalisation neurale, à partir du principe de la figure 5, de la sélection de la grandeur maximale parmi un nombre égal à une puissance de 2 de valeurs dont l'une au moins est positive ou nulle ;
- la figure 7 illustre un réseau complet à quatre blocs, mettant en oeuvre le schéma de la figure 5 ;
- la figure 8 présente le taux d'erreurs de lecture (après une seule itération) de $M$ messages de $k = 36$ bits par un réseau de $B = 4$ blocs de $l = 512$ neurones, lorsqu'un des blocs ne reçoit aucune information, ainsi que la densité du réseau ;
- la figure 9 présente le taux d'erreurs de lecture (après 4 itérations) de $M$ messages de $k = 64$ bits par un réseau de $B = 8$ blocs de $l = 256$ neurones, lorsque la moitié des blocs ne reçoit aucune information, ainsi que la densité du réseau ;
- la figure 10 présente le taux de rejet, après une seule itération, d'un message quelconque lorsque $M$ messages de $k = 36$ bits ont été appris par un réseau de $B = 8$ blocs de $l = 512$ neurones ;
- la figure 11 illustre schématiquement une mise en oeuvre d'un décodage selon l'invention ;
- la figure 12 présente un exemple d'apprentissage d'un message, constitué de symboles non binaires, appartenant à un alphabet fini prédéterminé.

### 7. description d'un mode de réalisation

*7.1 introduction*

L'invention s'appuie sur des aspects développés dans le domaine de la théorie de l'information, dont les développements ont été pendant longtemps suscités et captés par les besoins des télécommunications, en perpétuelle demande d'améliorations. Des avancées considérables ont ainsi été obtenues dans l'écriture de l'information, sa compression, sa protection, son transport et son interprétation.

En particulier, ces dernières années ont vu l'émergence de nouveaux procédés de traitement de l'information qui s'appuient sur des échanges probabilistes à l'intérieur de machines pluricellulaires. Chaque cellule est conçue pour traiter un problème de manière localement optimale et c'est l'échange d'informations (des probabilités ou des logarithmes de probabilité) entre les cellules qui conduit à un résultat globalement optimal.

Le turbo-décodage a ouvert la voie à ce type d'approche (voir par exemple C. Berrou, A. Glavieux and P. Thitimajshima, "Near Shannon limit error-correcting coding and decoding: turbo-codes", Proc. of IEEE ICC '93, Geneva, pp. 1064-1070, May 1993. Voir aussi : Sylvie Kerouédan and Claude Berrou (2010), Scholarpedia, 5(4):6496). Le turbo-décodage a été reconnu comme une instance du principe très général de propagation de croyance (« *belief propagation* » en anglais ; voir par exemple R. J. McEliece, D. J. C. MacKay and J.-F. Cheng, "Turbo decoding as an instance of Pearl's 'belief propagation' algorithm", IEEE Journal on SelectedAreas in Commun., vol. 16, no. 2, pp. 140-152, Feb. 1998), lequel a trouvé par la suite une autre application importante dans le décodage des codes « *Low Density Parity Check* » (LDPC, voir par exemple R. G. Gallager, "Low-density parity-check codes", IRE Trans. Inform. Theory, Vol. IT-8, pp: 21-28, Jan. 1962).

Les inventeurs ont observé que l'on pouvait tenter d'adapter les développements effectués dans ces domaines à l'utilisation des réseaux de neurones, en termes de structure distribuée, séparabilité des informations, résistance au bruit, résilience, etc.

*7.2 parcimonie*

Selon un aspect de l'invention, on augmente la diversité d'apprentissage grâce à la parcimonie (en tant que traduction de l'anglais *sparsity*). Ce principe de parcimonie peut être mis en oeuvre aussi bien sur la longueur des messages à mémoriser ($k < n$) que sur la densité de connexions dans les réseaux à codage réparti.

Pour augmenter la diversité d'apprentissage au-delà de la valeur donnée par la relation (3), les inventeurs ont développé le raisonnement suivant. La quantité d'information binaire portée par les connexions, définies sur P niveaux, d'un graphe complet à $n$ sommets est $\dfrac{n(n-1)}{2}\log_2(P)$ soit $\dfrac{n^2}{2}\log_2(P)$ en pratique, pour $n$ grand. Le nombre de messages de longueur $n$ que cela peut représenter, comme par exemple dans un réseau de Hopfield, ne peut donc dépasser $\dfrac{n}{2}\log_2(P)$ (la borne supérieure donnée par (3) est plus faible car elle intègre un critère de décodabilité).

Si, par un moyen approprié, on limite la longueur des messages à une valeur $k$ inférieure à $n$, le nombre de messages $M$ peut être augmenté tant que :

$$M \le \frac{n^2 \log_2(P)}{2k} \qquad (4)$$

La borne supérieure de la diversité d'apprentissage est donc linéaire en $n$, pour des messages de longueur $n$, et quadratique en $n$ pour des messages de longueur $k < n.$ La borne supérieure de la capacité (diversité x longueur) reste toutefois la même. Ceci souligne l'intérêt de considérer dans les réseaux de neurones des procédés de mémorisation de messages de longueurs bien inférieures à la taille des réseaux, comme développé par la suite.

*7.3 réseaux neuraux à grande diversité d'apprentissage*

Soit un réseau à connexions binaires (0,1) de $n$ neurones binaires (0,1). Ce réseau est compartimenté en B blocs de $l = n/B$ neurones, dits neurones fanaux ou fanaux. Dans la suite, nous supposons que $l$ est une puissance de 2, de telle sorte que chaque fanal puisse être adressé par un sous-message de $\kappa = \log_2(l)$ bits. Les messages adressés au réseau sont donc de longueur $k = B\kappa$.

La figure 2 illustre schématiquement une tel réseau, pour $B = 4$ blocs 21 à 24 de longueur $l$, chacun adressé par un message partiel 25 de $\kappa = \log_2(l)$ bits, est ainsi caractérisé par les paramètres suivants :

    $n$ : nombre total de neurones fanaux 25 de valeurs (0,1)
    $B$ : nombre de blocs
    $\kappa$ : longueur du message d'entrée pour chaque bloc
    $l = n/B = 2^\kappa$ : taille de bloc
    $k = B\kappa$ : longueur des messages d'entrée du réseau

Par ailleurs, les neurones fanaux sont de valeurs notées $\{u_{bj}\}$ ($b = 1...B$, $j = 1...l$) binaires (0,1). Les fanaux des différents blocs sont reliés entre eux par des connexions de valeurs binaires (0,1) notées $w_{b1j1b2j2}$. Il n'y a aucune connexion à l'intérieur d'un même bloc.

Les connexions, ou liaisons, 27 définissent ainsi une image physique du message considéré.

La figure 3 présente une autre représentation du réseau de la figure 2.

*7.4 Apprentissage*

L'apprentissage de $M$ messages de longueur $B\kappa$ s'effectue en deux étapes :

- 1- sélection d'un neurone fanal parmi $l$, pour chacun des $B$ blocs. La façon dont cette sélection s'effectue est détaillée dans la section 4.2.1. On notera que chaque bloc possède suffisamment de fanaux pour représenter tous les sous-messages possibles ($l = 2^\kappa$).

- 2- activation (*i.e.* mise à 1) des $\dfrac{(B-1)B}{2}$ connexions entre les neurones fanaux représentatifs du message. Certaines de ces connexions pouvaient déjà exister avant l'apprentissage de ce message particulier ; dans ce cas, ces connexions restent à la valeur 1. Ainsi, après l'apprentissage de $M$ messages, les poids des connexions ont pris la valeur :

$$w_{b_1 j_1 b_2 j_2} = \min(\sum_{\substack{m=1 \\ b_1 \neq b_2}}^{M} u_{b_1 j_1}^m u_{b_2 j_2}^m, 1) \qquad (5)$$

Le réseau est donc purement binaire : connexion (1) ou non connexion (0) entre deux neurones fanaux et l'apprentissage est incrémental. L'acquisition d'un nouveau message revient simplement à ajouter des connexions au réseau existant et aucune normalisation n'est nécessaire.

Selon l'argument développé en préambule, le nombre total de connexions étant $\dfrac{(B-1)n^2}{2B}$ avec P = 2 niveaux possibles, la borne supérieure de diversité d'apprentissage de messages de longueur $k = B\log_2(\dfrac{n}{B})$ est :

$$M_{\max} = \frac{(B-1)n^2}{2B^2 \log_2(\dfrac{n}{B})} \qquad (6)$$

Par exemple, avec les valeurs $n = 2048$ et $B = 4$, on obtient $M_{\max} = 42000$. Pour $n = 8192$, la borne est de l'ordre de 600000.

Après l'apprentissage de $M$ messages, la densité d du réseau (c'est-à-dire la proportion de connexions de valeur 1) est :

$$d = 1 - (1 - \frac{1}{l^2})^M \qquad (7)$$

Si $M << l^2$, cette densité est proche *de M/l²*.

Le réseau réalise donc une distribution de codes locaux parcimonieux (un seul neurone actif parmi $l$).

On peut noter que la notion de code local parcimonieux dans les sciences cognitives n'est pas nouvelle en soi (voir notamment Peter Foldiak, Dominik Endres (2008) Sparse coding. Scholarpedia, 3(1):2984), mais la façon dont ces codes sont ici associés et la manière dont le décodage global est effectué, comme proposé ci-après, apparaissent nouvelles et non évidentes.

*7.5 Décodage*

Le décodage du réseau fait localement appel à un décodage à maximum de vraisemblance pour chacun des *B* blocs, lequel est détaillé dans la section 7.5.1, et à un décodage global à passage de messages que l'on trouvera expliqué dans la section 7.5.2.

<u>7.5.1 Décodage local à maximum de vraisemblance</u>

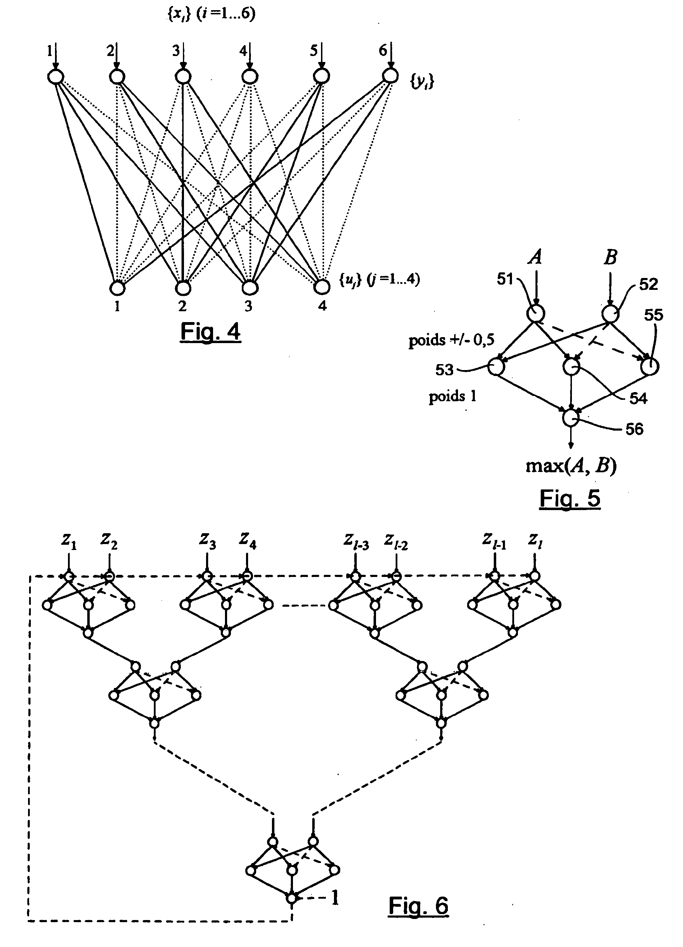

Le mode de réalisation décrit ci-après est mis en oeuvre dans un contexte de traitement itératif (ce qui n'est pas obligatoire, au moins dans certaines applications). Ce décodage s'appuie sur un graphe biparti binaire complet dont un exemple est donné dans la figure 4, pour 4 mots de code de 6 bits : +1-1-1-1+1, +1-1+1-1+1-1, +1+1-1-1+1+1, -1+1+1-1-1-1. Les traits pleins correspondent à une valeur +1, les tirets à -1.

Aux données reçues, de valeurs $\{x_i\}$ ($i = 1...\kappa$) réelles dans le cas le plus général, on associe $\kappa$ neurones de valeurs réelles $\{y_i\}$. De l'autre côté du graphe, $l$ neurones dits "neurones fanaux", de valeurs $\{u_j\}$ ($j = 1... l$) binaires (0,1), représentent les $l$ mots de code possibles. Les arcs du graphe $t_{ij}$ sont de valeur $\pm$ 1.

Le processus de décodage itératif peut être donné par les équations suivantes :

Initialisation :

$$y_i^0 = 0 \quad (i = 1...\kappa)$$
$$y_i^1 = x_i \qquad\qquad\qquad (8)$$

Pour l'itération *p* ($1 \leq p \leq p_{max}$) :

$$z_j^p = \sum_{i=1}^{\kappa} t_{ij}\left(y_i^p + \gamma y_i^{p-1}\right) \quad (j = 1...l) \qquad (9)$$

$$z_{\max}^p = \max\left\{z_j^p\right\} \qquad\qquad (10)$$

$$u_j^p = 1 \ \text{si} \ z_j^p = z_{\max}^p \ \text{et si} \ z_{\max}^p > \sigma$$

$$u_j^p = 0 \ \text{sinon} \qquad\qquad (11)$$

$$v_i^p = \sum_{j=1}^{l} t_{ij} u_j^p \qquad\qquad (12)$$

$$y_i^p = 1 \ \text{si} \ v_i^p > 0$$

$$y_i^p = -1 \ \text{si} \ v_i^p < 0$$

$$y_i^p = 0 \ \text{sinon} \qquad\qquad (13)$$

$\gamma$ est un coefficient d'effet mémoire qui permet de conserver, au rang $p$ du processus itératif, une fraction du résultat obtenu au rang $p$ - 1. Cet effet mémoire est indispensable lorsque plusieurs codes sont associés dans un réseau neural à codage distribué mais ne doit pas être exagéré pour éviter que des erreurs s'entretiennent dans les échanges d'information entre décodeurs locaux ou encore que des motifs non appris soient reconnus par le décodeur. On notera que les équations (10) et (11) autorisent l'activation de plusieurs neurones fanaux à valeur maximale, ce qui peut être le cas par exemple lorsqu'une ou plusieurs valeurs d'entrée $x_i$ sont effacées.

$\sigma$ est le seuil d'activation des neurones fanaux. Pour réaliser un véritable décodage à maximum de vraisemblance, $\sigma$ doit être égal à -$\infty$. En fonction du contexte, on peut donner à $\sigma$ des valeurs finies, c'est-à-dire imposer aux neurones fanaux une limite basse d'activité. Par exemple, en prenant $\sigma = 0$ et dans la situation où toutes les données d'entrée sont effacées, la condition de (11) maintient tous les neuraux fanaux à la valeur nulle. Cet algorithme peut donc réaliser une sorte de décodage à sortie pondérée, apte à considérer des messages totalement ou partiellement effacés.

### 7.5.2 Décodage global du réseau

Le décodage du réseau à codage réparti (incluant les décodages locaux) s'appuie sur l'algorithme suivant, où $\{d_{bi}\}$ ($b$ = 1...$B$, $i$ = 1...$\kappa$) est le vecteur d'entrée/sortie et $\{t_{ij}\}$ est le graphe biparti (-1,1) reliant, pour chacun des blocs, les données d'entrée aux neurones fanaux (cf. 7.51) :

$$z_{bj} = \sum_{i=1}^{\kappa} t_{ij} d_{bi} \quad (b = 1...B, j = 1...l) \qquad (15)$$

$$z_{b,\max} = \max\{z_{bj}\} \qquad (16)$$

$$u_{bj} = 1 \text{ si } z_{bj} = z_{b,\max} \text{ et si } z_{b,\max} > \sigma$$

$$u_{bj} = 0 \text{ sinon} \qquad (17)$$

$$v_{bj} = \sum_{\substack{b'=1 \\ b'\neq b}}^{B} \sum_{j'=1}^{l} w_{bjb'j'} u_{b'j'} + \gamma u_{bj} \qquad (18)$$

$$v_{b,\max} = \max\{v_{bj}\} \qquad (19)$$

$$u_{bj} = 1 \text{ si } v_{bj} = v_{b,\max} \text{ et si } v_{b,\max} > \sigma$$

$$u_{bj} = 0 \text{ sinon} \qquad (20)$$

$$d_{bi} = \sum_{j=1}^{l} t_{ij} u_{bj} \quad (b = 1...B, i = 1...\kappa) \qquad (21)$$

En répétant le traitement, entre les équations (18) et (20), le processus peut devenir itératif. La nécessité des itérations n'est pas toujours avérée. Cela peut être un bénéfice lorsque le réseau est utilisé en tant que mémoire associative, avec des effacements nombreux ou des erreurs dans les données d'entrée $\{d_{bi}\}$ et/ou lorsque B est grand.

Si le réseau est appelé à réaliser une fonction de reconnaissance du type *go/no go* (reconnaissance d'un message appris/rejet d'un message non appris), un seul passage suffit.

De la même manière que dans la relation (9), le paramètre γ utilisé dans (18) est un coefficient qui introduit un effet mémoire, que l'on prendra égal à 1 dans la suite. Cet effet mémoire garantit qu'un message appris, s'il est présenté à l'entrée du réseau sans aucune altération, est toujours reconnu. La totalité des valeurs binaires de sortie (relation (21)) est alors égale aux données d'entrée.

7.5.3 présentation simplifiée du décodage

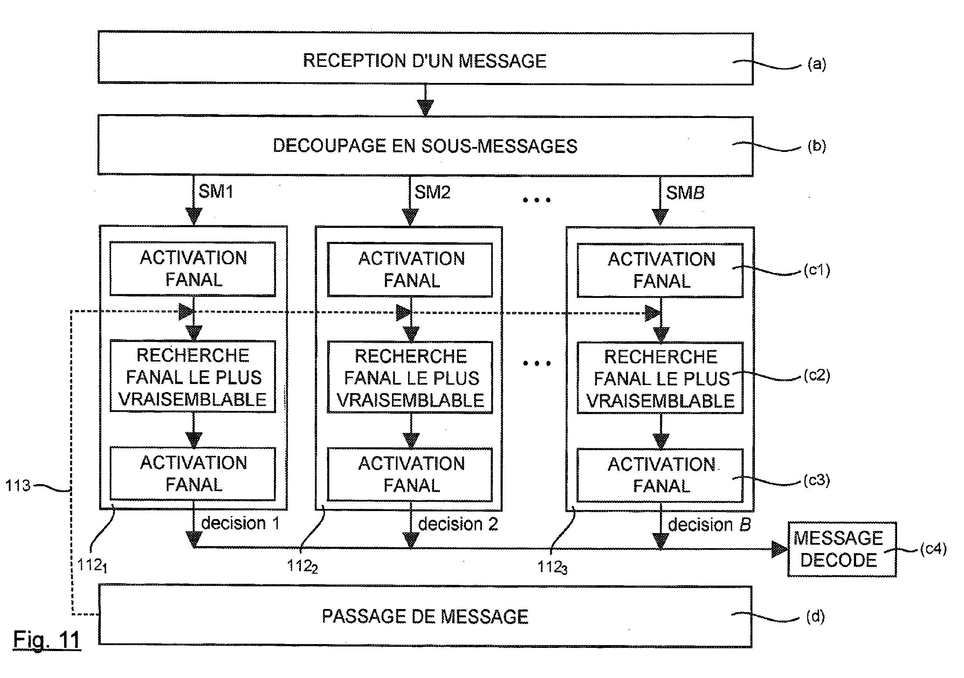

La figure 11 résume et généralise, de façon simplifiée, le procédé de décodage de l'invention, selon un mode de réalisation particulier.

Ce procédé comprend tout d'abord une étape (a) de réception d'un message 111 à traiter. Ce message 111 est constitué généralement d'un ensemble de valeurs réelles (représentatives, a priori, des bits constituant le message d'origine, qu'il faut reconnaître, et qui a pu être dégradé, par exemple suite à une transmission dans un canal perturbé).

Dans une étape (b), le message 111 est découpé en *B* sous-messages SM1 à SM*B*. Chaque sous-message SM*i* correspond à un des *B* blocs du réseau de neurones, et est traité pour un décodage local 112*i* correspondant (appelé étape (c)).

Cette étape (c) comprend tout d'abord une étape d'initialisation (c1), dans laquelle on active (passage à l'état allumé) le fanal correspondant au sous-message délivré par l'étape (b). Tous les autres fanaux du bloc concerné sont éteints. Dans certains cas cependant, il est possible que plusieurs fanaux soient allumés simultanément.

On procède ensuite, dans une étape (c2) à la rechercher du fanal le plus vraisemblable, par exemple à l'aide des équations présentées ci-dessus. Dans une étape (c3), on procède à l'activation de ce fanal le plus vraisemblable, et à l'extinction des autres fanaux.

A nouveau, dans certaines situations, plusieurs fanaux peuvent être les plus vraisemblables, et rester activés.

On obtient ainsi, pour chaque bloc, une décision i, permettant la reconstruction (c4) d'un message décodé.

Lorsqu'une ou plusieurs itérations sont souhaitées, une étape (d) de décodage global assure le passage des décisions relatives au message décodé, de façon qu'elles soient ré-introduites (113) dans les décodages locaux, au niveau de l'étape (c2). Les étapes (c2) à (c4) sont alors répétées.

Dans le cas de ré-itérations, et comme expliqué plus haut, un effet mémoire peut être introduit, pour tenir compte des décisions prises lors d'au moins une itération précédente.

*7. 6 Implémentation neurale de la recherche d'un maximum*

Une façon d'implémenter la fonction « maximum » dans un réseau neural se déduit de l'équivalence suivante, pour deux nombres *A* et *B* quelconques :

$$\max(A,B) = \frac{A+B}{2} + \left|\frac{A-B}{2}\right| \qquad (14)$$

En utilisant des neurones à seuil nul, comme dans les équations (2), mais à valeurs de sortie (0,1) au lieu de (-1,1), l'équivalence (14) peut être réalisée par le circuit de la figure 5, sous condition que l'une au moins des deux entrées soit positive ou nulle.

Ce circuit comprend donc :

- un premier neurone 51 apte à recevoir une première valeur A ;
- un deuxième neurone 52 apte à recevoir une seconde valeur B, au moins l'une desdites première valeur A et seconde valeur B étant positive ou nulle ;
- un troisième neurone 53, connecté au premier neurone par une connexion de poids 0,5 et au deuxième neurone par une connexion de poids 0,5 ;
- un quatrième neurone 54, connecté au premier neurone par une connexion de poids 0,5 et au deuxième neurone par une connexion de poids - 0,5 ;
- un cinquième neurone 55, connecté au premier neurone par une connexion de poids -0,5 et au deuxième neurone par une connexion de poids 0,5 ;
- un sixième neurone, 56 connecté aux troisième, quatrième et cinquième neurones par des connexions de poids 1, et délivrant la valeur maximum entre les valeurs A et B.

Le circuit de la figure 6 élargit la recherche et la sélection du maximum à un nombre $I$ de grandeurs $\{z_j\}$ à comparer égal à une puissance de 2. Au moins l'une de ces grandeurs est positive ou nulle et la succession des couches de comparateurs identiques à celui de la figure 4 conduit à la sélection de max$\{z_j\}$. A ce maximum, est soustraite la valeur 1 et le résultat est renvoyé vers les neurones de la première couche en tant qu'entrée négative. Grâce à ce retour, seuls les neurones dont les entrées sont à la valeur maximale restent actifs (sortie égale à 1).

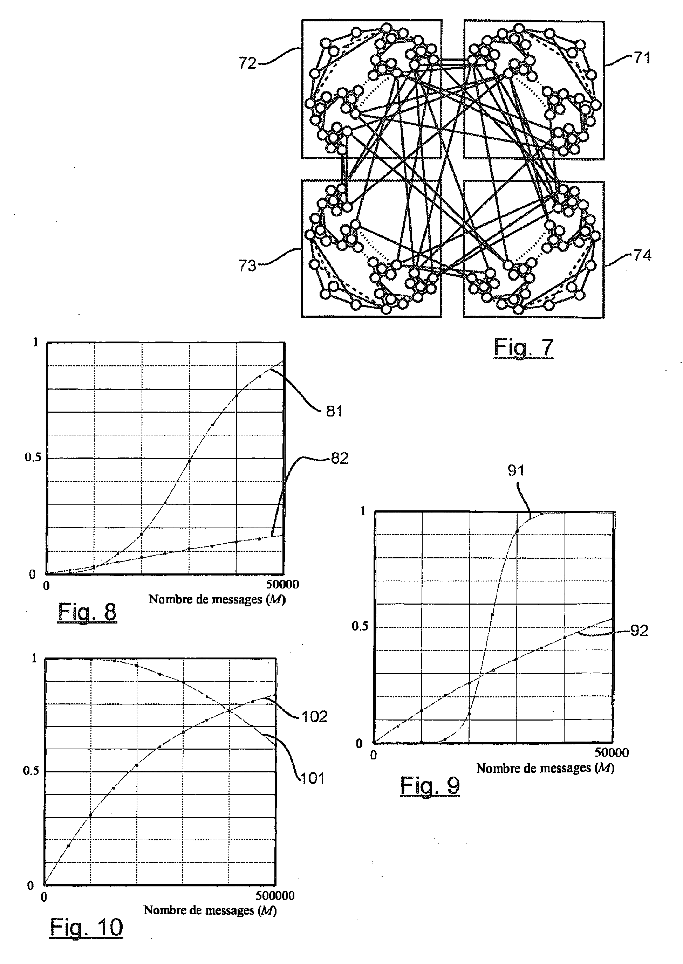

La figure 7 illustre un exemple de réseau de neurones complet, utilisant cette structure, toujours dans le cas de quatre blocs 71 à 74.

*7.6 Exemples d'applications*

7.6.1 Réseau neural à codage réparti en tant que mémoire associative

Supposons que l'on efface les entrées d'un des blocs et que les autres $B$ - 1 autres blocs soient adressés sans erreurs. Alors, selon les équations (18) à (20) et après une itération, la probabilité que le neurone fanal représentant correctement le bloc effacé soit le seul activé est :

$$P_1 = \left(1 - d^{B-1}\right)^{I-1} \qquad (22)$$

Par ailleurs, la probabilité qu'aucun des autres blocs ne voit son neurone fanal se modifier est :

$$P'_1 = \left(\left(1 - d^{B-2}\right)^{I-1}\right)^{B-1} \qquad (23)$$

si l'effet mémoire n'est pas utilisé ($\gamma$ = 0) et vaut 1 dans le cas contraire. En supposant que l'effet mémoire est utilisé, la probabilité d'erreur dans le recouvrement du message entier est :

$$P_{e,1} = 1 - P_1 = 1 - (1 - d^{B-1})^{I-1}$$

soit encore, d'après (7) :

$$P_{e,1} = 1 - \left(1 - \left(1 - \left(1 - \frac{1}{I^2}\right)^M\right)^{B-1}\right)^{I-1} \qquad (24)$$

Pour de petites valeurs *de M* ($M \ll I^2$) et pour $I \gg 1$, $P_{e,1}$ est bien estimée par :

$$P_{e,1} \approx I\left(\frac{M}{I^2}\right)^{B-1} \qquad (25)$$

Plus généralement, lorsque $B_{\text{eff}} < B$ blocs sont effacés, la probabilité d'erreur est

$$P_{e,B_{eff}} = 1 - \left(1 - \left(1 - \left(1 - \frac{1}{I^2}\right)^M\right)^{B-B_{eff}}\right)^{(I-1)B_{eff}} \qquad (26)$$

Pour $M \ll I^2$ et $I \gg 1$, $P_{e,Beff}$ est bien estimée par :

$$P_{e,B_{eff}} \approx lB_{eff}\left(\frac{M}{l^2}\right)^{B-B_{eff}} \qquad (27)$$

La figure 8 fournit le résultat de simulations effectuées (une seule itération) sur un réseau de 4 blocs de 512 neurones fanaux (k = 4$\kappa$ = 36 bits), lorsqu'un des blocs ne reçoit aucune information. Plus précisément cette figure 10 présente :

- le taux d'erreurs de lecture 81 (après une seule itération) de M messages de $k$ = 36 bits par un réseau de $B$ = 4 blocs de $l$ = 512 neurones, lorsqu'un des blocs ne reçoit aucune information ;
- la densité du réseau 82 (relation (7)).

Le taux d'erreur acceptable dépend bien sûr de l'application. S'il s'agit de concevoir des machines intelligentes bio-inspirées, un taux d'erreur de 0,1 peut convenir. On peut vérifier, à partir de (27) et en se fixant un taux d'erreurs $P_{e,Beff}$ = $P_0$, avec une moitié de blocs effacés ($B_{eff}$ = $B$/2), que le nombre de blocs $B_{opt}$ qui maximise la quantité de messages appris est :

$$B_{opt} = \text{nint}\left(\log\left(\frac{n}{2P_0}\right)\right) \qquad (28)$$

(logarithme naturel)

La figure 9 donne le résultat de simulations effectuées (avec 4 itérations au maximum) sur un réseau de 8 blocs de 256 neurones fanaux ($k$ = 8$\kappa$ = 64 bits), lorsque la moitié des sous-messages est effacée. Plus précisément, cette figure 11 montre :

- le taux d'erreurs de lecture 91 (après 4 itérations) de $M$ messages de $k$ = 64 bits par un réseau de $B$ = 8 blocs de $l$ = 256 neurones, lorsque la moitié des blocs ne reçoit aucune information. On observe, par rapport à la courbe de la figure 10, que la pente est plus prononcée parce que le nombre de blocs (8 au lieu de 4) est plus grand (cf. relations (26) et (27)) ;
- la densité du réseau 92 (relation (7)).

Une telle machine d'environ 2000 neurones (soit grosso modo la complexité d'une colonne néocorticale), avec 1,8 $10^6$ connexions binaires, peut donc apprendre et retrouver presque sûrement jusqu'à 15000 messages quelconques de 64 bits à moitié effacés.

Bien sûr, à la complexité du réseau qui relie les neurones fanaux entre eux, il faut ajouter celle des décodeurs locaux chargés de déterminer les maxima d'activité et de relier fanaux et sous-messages. Toutefois, ces décodeurs locaux, de connexions établies une fois pour toutes et bien moins nombreuses que celles du réseau principal, n'interviennent pas dans le dénombrement des connexions informationnelles.

Par comparaison, en disposant du même nombre de connexions informationnelles, un réseau de Hopfield est capable d'acquérir et de se remémorer environ 250 messages de 1900 bits. Les connexions y sont représentées sur 8 bits, au lieu de 1 dans le cas du réseau à codage réparti, objet de l'invention. Le gain en diversité d'apprentissage est donc de l'ordre de 60 et l'efficacité de mémorisation (i.e. le rapport entre la capacité de mémorisation et la quantité d'information nécessaire au stockage des messages) passe de 3,3 $10^{-2}$ pour le réseau de Hopfield à 53,3 $10^{-2}$ pour le réseau à codage réparti.

<u>7.6.2 Réseau neural à codage réparti en tant que discriminateur</u>

Une autre application possible du réseau parcimonieux est la classification. Nous considérons ici un problème simple de discrimination entre messages appris et messages non appris. Soit un réseau qui a appris un certain nombre de messages et auquel on soumet un message tiré au hasard (il y en a $2^k$ possibles, beaucoup plus que de messages appris). Soit $P_c$ la probabilité après une itération qu'un des neurones fanaux activés ait c connexions avec les $B$-1 autres fanaux activés par ce faux message (c $\leq$ $B$-1) :

$$P_c = \binom{B-1}{c} d^c (1-d)^{B-1-c} \qquad (29)$$

Soit également $P_c$ la probabilité qu'un des neurones fanaux ait moins de c connexions avec les $B$-1 autres fanaux activés par le faux message :

$$P'_c = \sum_{s=0}^{c-1} P_s \qquad (30)$$

Un fanal activé restera activé si le nombre de ses connexions, augmenté de la valeur $\gamma$ de l'effet mémoire, est strictement supérieur au nombre de connexions de chacun des autres neurones du même bloc. La probabilité en est :

$$P_{f,1} = \sum_{c=0}^{B-1} P_c \left( P'_{c+\gamma} \right)^{l-1} \qquad (31)$$

Finalement, la probabilité que les $B$ fanaux restent tous activés est :

$$P_f = \left( P_{f,1} \right)^B \qquad (32)$$

ce qui donne la formule :

$$P_f = \left( \sum_{c=0}^{B-1} P_c \left( \sum_{s=0}^{c+\gamma-1} P_s \right)^{l-1} \right)^B \qquad (33)$$

La figure 10 fournit le résultat de simulations effectuées (avec une seule itération) sur un réseau de 4 blocs de 512 neurones fanaux (k = 4κ = 36 bits), lorsque M messages ont été appris et quand on soumet au réseau un message quelconque. Celui-ci est rejeté (c'est-à-dire que la réponse du réseau est différente, sur une valeur binaire au moins, du message appliqué) avec une très forte probabilité jusqu'à des valeurs de $M$ de l'ordre de 150000. Quant aux messages appris (valides), ils sont tous reconnus quelle que soit la valeur de $M$, grâce à l'effet mémoire (relation (18)).

Plus précisément, cette figure 10 montre :

- le taux de rejet 101 (après une seule itération) d'un message quelconque lorsque $M$ messages de $k$ = 36 bits ont été appris par un réseau de $B$ = 4 blocs de $l$ = 512 neurones. A l'opposé, tous les messages valides sont reconnus par le réseau quelle que soit la valeur deM;
- La densité du réseau 102 (relation (7)).

*7. 7 Exemple d'application à un alphabet fini non binaire*

Dans le mode de réalisation décrit ci-dessus, on traite des messages binaires, constitués d'un ensemble de bits. Toutefois, le réseau de neurones peut apprendre de façon plus générale des messages constitués d'un assemblage de $B$ symboles tirés d'un alphabet fini (par exemple les chiffres du système décimal ou les lettres de l'alphabet).

Pour cela, on prévoit que chaque bloc contient autant de neurones fanaux ($l$) qu'il y a de symboles dans cet alphabet. Dans l'hypothèse où $l$ est une puissance de 2, par simplification, chaque fanal peut être adressé par un sous-message de κ =$\log_2(l)$ bits. En d'autres termes, tous les $2^{\log_2(l)}$ =$l$ sous-messages de $\log_2(l)$ bits sont possibles et les messages complets traités par le réseau sont de longueur $k$ = $B$.κ bits.

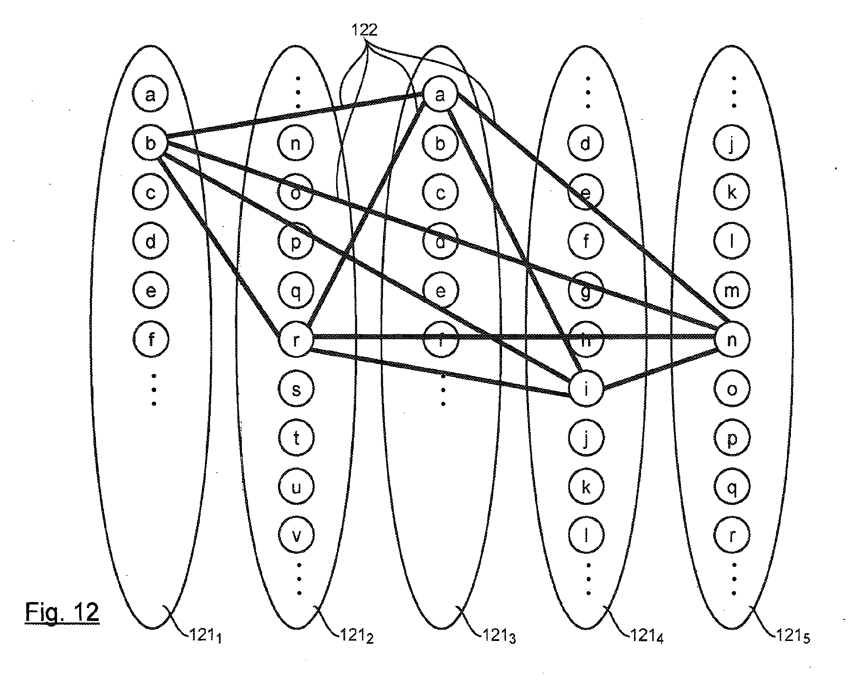

L'apprentissage de messages constitués de symboles (et non plus de messages binaires) est illustré par l'exemple de la figure 12 où les symboles sont des lettres, appartenant à l'alphabet latin. Il s'agit par exemple de mémoriser des mots, ou des séquences de lettres.

Sur la figure 12, cinq blocs $121_1$ à $121_5$ sont illustrés (plus généralement, le nombre de blocs dépendra de la taille maximale des mots à mémoriser). Ils contiennent chacun 26 fanaux associés respectivement aux 26 caractères de l'alphabet latin. Pour mémoriser le mot « brain », cinq fanaux sont allumés, un dans chaque bloc :

- bloc $121_1$ : fanal associé à la lettre « b » ;
- bloc $121_2$ : fanal associé à la lettre « r » ;
- bloc $121_3$ : fanal associé à la lettre « a » ;
- bloc $121_4$ : fanal associé à la lettre « i » ;
- bloc $121_5$ : fanal associé à la lettre « n »,

et les connexions correspondantes 122 sont créées, pour former un motif à 5 sommets, correspondant aux fanaux allumés, et tous reliés les uns aux autres.

En théorie des graphes, un sous-ensemble de $B$ noeuds tous reliés les uns aux autres est généralement appelé une clique. La figure 12 illustre ainsi une clique à 5 sommets, ou une 5-clique. Les messages sont donc appris sous forme de cliques dont les sommets appartiennent tous à des blocs différents.

*7. 8 Exemples d'implantation*

L'invention peut être mise en oeuvre de différentes manières. Notamment, elle peut être réalisée sous la forme d'un dispositif de traitement de données, et par exemple implantée directement dans un circuit intégré, ou un micro-circuit (ou plusieurs).

Elle peut également être réalisée sous une forme logicielle, en tout ou partie. Elle peut alors se présenter sous la forme d'un programme complet de mise en oeuvre d'un réseau de neurones, ou sous la forme de deux programmes, assurant respectivement l'apprentissage et le décodage.

Il est également possible que le réseau de neurones appris soit partagé et/ou distribué. Il est ainsi possible que ce réseau de neurones soit stocké sur un site distant, accessible par exemple via le réseau Internet ou un réseau privé, et qu'il soit interrogé à distance, par un ordinateur ou tout autre appareil équipé de moyen de traitement. Ceci permet notamment d'optimiser et de sécuriser la conservation des données, et le cas échéant de partager l'apprentissage et/ou le décodage entre plusieurs machines ou utilisateurs.

**Revendications**

1. Dispositif d'apprentissage de messages, mettant en oeuvre un réseau de neurones,
   comprenant un ensemble de neurones, dits fanaux, lesdits fanaux sont des neurones binaires, pouvant prendre uniquement deux états, un état allumé et un état éteint,
   lesdits fanaux étant distribués en blocs comprenant chacun un nombre prédéterminé de fanaux,
   et des moyens d'apprentissage dudit réseau de neurones, comprenant :

   - des moyens de découpage d'un message à apprendre en $B$ sous-messages à apprendre, B supérieur ou égal à deux,
   chaque bloc de fanaux étant affecté au traitement d'un desdits sous-messages, chaque fanal étant associé à une occurrence spécifique dudit sous-message,
   - des moyens d'activation d'un unique fanal dans l'état allumé dans chaque bloc, pour un sous-message à apprendre, tous les autres fanaux dudit bloc étant dans l'état éteint ;
   - des moyens de création de connexions entre fanaux, activant, pour un message à apprendre, des connexions entre les fanaux allumés de chacun desdits blocs, lesdites connexions étant des connexions binaires, pouvant prendre uniquement un état connecté et un état déconnecté.

2. Dispositif d'apprentissage selon la revendication 1, **caractérisé en ce que** lesdits messages présentent une longueur $k = B\kappa$, où $B$ est le nombre de blocs, et $\kappa$ la longueur d'un sous-message, chaque bloc comprenant $l = 2^\kappa$ fanaux.

3. Dispositif d'apprentissage selon l'une quelconque des revendications 1 et 2, **caractérisé en ce qu'**il est réalisé sous la forme d'au moins un circuit intégré.

4. Dispositif de décodage d'un message à décoder, à l'aide d'un réseau de neurones configuré à l'aide d'un dispositif d'apprentissage selon l'une quelconque des revendications 1 à 3, comprenant :

- des moyens de découpage du message à décoder en *B* sous-messages à décoder ;
- des moyens d'allumage de fanaux associés respectivement auxdits sous-messages à décoder, dans les blocs correspondants ;
- des moyens d'association, audit message à décoder, d'un message décodé, en fonction desdits fanaux allumés.

**5.** Dispositif de décodage selon la revendication 4, **caractérisé en ce que** lesdits moyens d'association mettent en oeuvre un décodage à maximum de vraisemblance.

**6.** Dispositif de décodage selon la revendication 5, **caractérisé en ce qu'**il comprend des moyens de décodage local, pour chacun desdits blocs, activant dans l'état allumé au moins un fanal le plus vraisemblable, dans ledit bloc, en fonction du sous-message à décoder correspondant,
et délivrant un sous-message décodé en fonction des connexions activées entre lesdits fanaux dans l'état allumé.

**7.** Dispositif de décodage selon la revendication 6, **caractérisé en ce qu'**il comprend des moyens de décodage global, assurant une fonction de passage de message, en tenant compte de l'ensemble des fanaux dans l'état allumé.

**8.** Dispositif de décodage selon l'une quelconque des revendications 6 et 7, **caractérisé en ce qu'**il met en oeuvre un décodage itératif, assurant au moins deux itérations du traitement effectué par lesdits moyens de décodage local.

**9.** Dispositif de décodage selon l'une quelconque des revendications 3 à 8, **caractérisé en ce que** lesdits moyens d'association mettent en oeuvre des neurones de traitement, organisés de façon à déterminer la valeur maximum d'au moins deux valeurs soumises en entrée.

**10.** Dispositif de décodage selon la revendication 9, **caractérisé en ce que** lesdits neurones de traitement comprennent au moins un module de base constitué de six neurones à seuil nul et à valeurs de sortie 0 ou 1, comprenant :

- un premier neurone apte à recevoir une première valeur A ;
- un deuxième neurone apte à recevoir une seconde valeur B, au moins l'une desdites première valeur A et seconde valeur B étant positive ou nulle ;
- un troisième neurone, connecté au premier neurone par une connexion de poids 0,5 et au deuxième neurone par une connexion de poids 0,5 ;
- un quatrième neurone, connecté au premier neurone par une connexion de poids 0,5 et au deuxième neurone par une connexion de poids - 0,5 ;
- un cinquième neurone, connecté au premier neurone par une connexion de poids -0,5 et au deuxième neurone par une connexion de poids 0,5 ;
- un sixième neurone, connecté aux troisième, quatrième et cinquième neurones par des connexions de poids 1, et délivrant la valeur maximum entre les valeurs A et B.

**11.** Dispositif de décodage selon l'une quelconque des revendications 4 à 10, **caractérisé en ce qu'**il est réalisé sous la forme d'au moins un circuit intégré.

**12.** Procédé d'apprentissage de messages, mettant en oeuvre un réseau de neurones, mettant en oeuvre un ensemble de neurones, dits fanaux, lesdits fanaux sont des neurones binaires, pouvant prendre uniquement deux états, un état allumé et un état éteint,
lesdits fanaux étant distribués en blocs comprenant chacun un nombre prédéterminé de fanaux,
et comprenant une phase d'apprentissage comprenant les étapes suivantes, pour un message à apprendre :

- une étape de découpage d'un message à apprendre en *B* sous-messages à apprendre, *B* supérieur ou égal à deux,
chaque bloc de fanaux étant affecté au traitement d'un desdits sous-messages,
chaque fanal étant associé à une occurrence spécifique dudit sous-message,
- une étape d'activation d'un unique fanal dans l'état allumé dans chaque bloc, pour un sous-message à apprendre, tous les autres fanaux dudit bloc étant dans l'état éteint ;
- une étape de création de connexions entre fanaux, activant, pour un message à apprendre, des connexions entre les fanaux allumés de chacun desdits blocs, lesdites connexions étant des connexions binaires, pouvant prendre uniquement un état connecté et un état déconnecté.

**13.** Procédé d'apprentissage selon la revendication 12, **caractérisé en ce que**, dans ladite étape d'activation, une connexion entre deux fanaux possédant la valeur 1 conserve cette valeur.

**14.** Produit programme d'ordinateur téléchargeable depuis un réseau de communication et/ou stocké sur un support lisible par ordinateur et/ou exécutable par un microprocesseur, comprenant des instructions de code de programme pour l'exécution du procédé d'apprentissage selon l'une au moins des revendications 12 et 13, lorsqu'il est exécuté sur un ordinateur.

**15.** Procédé de décodage d'un message à décoder, à l'aide d'un réseau de neurones configuré selon le procédé d'apprentissage de l'une quelconque des revendications 12 et 13, comprenant les étapes suivantes :

(a) réception d'un message à décoder ;
(b) découpage dudit message à décoder en $B$ sous-messages à décoder ;
(c) association, audit message à décoder, d'un message décodé, en fonction des fanaux allumés correspondant auxdits sous-messages à décoder.

**16.** Procédé de décodage selon la revendication 15, **caractérisé en ce que** ladite étape (c) comprend, pour chacun desdits sous-messages à décoder, et pour chaque bloc de fanaux correspondant, les sous-étapes de :

(c1) initialisation, par activation dans l'état allumé d'au moins un fanal correspondant au sous-message traité, et extinction de tous les autres fanaux dudit bloc ;
(c2) recherche d'au moins un fanal le plus vraisemblable, parmi l'ensemble des fanaux dudit bloc ;
(c3) activation dans l'état allumé dudit au moins un fanal le plus vraisemblable, et extinction de tous les autres fanaux dudit bloc ;
et une étape de :
(c4) détermination du message décodé correspondant au message à décoder, par combinaison des sous-messages désignés par les fanaux dans l'état allumé.

**17.** Procédé de décodage selon la revendication 16, **caractérisé en ce qu'**il comprend une étape :

(d) de passage de messages entre les $B$ blocs, adaptant les valeurs des fanaux pour une réintroduction dans l'étape (c2),

lesdites étapes (c2) à (c4) étant ensuite réitérées.

**18.** Procédé de décodage selon la revendication 17, **caractérisé en ce que**, lors d'une réitération, l'étape (c2) tient compte des informations délivrées par l'étape (c4) et des informations prises en compte lors d'au moins une itération précédente.

**19.** Procédé de décodage selon la revendication 18, **caractérisé en ce que** lesdites Informations prises en compte lors d'au moins une itération précédente sont pondérées à faide d'un coefficient d'effet mémoire y.

**20.** Procédé de décodage selon l'une quelconque des revendications 17 à 19, **caractérisé en ce que**, dans l'étape (c3), un fanal le plus vraisemblable n'est pas activé si sa valeur est inférieure à un seuil prédéterminé σ.

**21.** Procédé de décodage selon l'une quelconque des revendications 16 à 20, **caractérisé en ce qu'**il délivre, pour un message à décoder :

- un message décodé correspondant au message à décoder, de façon à assurer une fonction de mémoire associative ; ou
- une information binaire, indiquant si le message à décoder est ou non un message déjà appris par ledit réseau de neurones, de façon à assurer une fonction de discriminateur.

**22.** Produit programme d'ordinateur téléchargeable depuis un réseau de communication et/ou stocké sur un support lisible par ordinateur et/ou exécutable par un microprocesseur, comprenant des instructions de code de programme pour l'exécution du procédé de décodage selon l'une au moins des revendications 15 à 21, lorsqu'il est exécuté sur un ordinateur.

**Patentansprüche**

**1.** Vorrichtung zum Einlernen von Meldungen, die ein neuronales Netzwerk einsetzt, umfassend eine Menge von Neuronen, Fanale genannt, wobei die Fanale binäre Neuronen sind, die nur zwei Zustände einnehmen können, einen gezündeten und einen ungezündeten,
wobei die Fanale in Blöcken verteilt sind, jeweils umfassend eine vorbestimmte Anzahl von Fanalen,
und Einlernmittel, umfassend:

- Mittel zum Aufteilen einer einzulernenden Meldung in B einzulernende Untermeldungen, wobei B größer oder gleich zwei ist,

wobei jeder Fanalblock einer Bearbeitung einer der Untermeldungen zugeordnet ist, wobei jedes Fanal einem spezifischen Aufscheinen der Untermeldung zugeordnet ist,

- Mittel zum Zünden eines einzigen Fanals in jedem Block für eine einzulernende Untermeldung, wobei alle anderen Fanale des Blocks im ungezündeten Zustand sind;
- Mittel zur Erzeugung von Verbindungen zwischen Fanalen, die für eine einzulernende Meldung Verbindungen zwischen den gezündeten Fanalen jedes der Blöcke aktivieren, wobei die Verbindungen binäre Verbindungen sind, die nur einen verbundenen und einen unverbundenen Zustand annehmen können.

**2.** Einlernvorrichtung nach Anspruch 1, **dadurch gekennzeichnet, dass** die Meldungen eine Länge $k = B\kappa$ aufweisen, wobei B die Anzahl von Blöcken und $\kappa$ die Länge einer Untermeldung ist, wobei jeder Block $l = 2^\kappa$ Fanale umfasst.

**3.** Einlernvorrichtung nach einem der Ansprüche 1 und 2, **dadurch gekennzeichnet, dass** sie in Form mindestens einer integrierten Schaltung ausgeführt ist.

**4.** Vorrichtung zur Decodierung einer zu decodierenden Meldung mit Hilfe eines neuronalen Netzwerkes, das mit Hilfe einer Einlernvorrichtung nach einem der Ansprüche 1 bis 3 konfiguriert ist, umfassend:

- Mittel zum Aufteilen der zu decodierenden Meldung in B zu decodierende Untermeldungen;
- Mittel zum Zünden von Fanalen, die jeweils den zu decodierenden Untermeldungen zugeordnet sind, in den entsprechenden Blöcken;
- Mittel zur Zuordnung einer decodierten Meldung zu der zu decodierenden Meldung in Abhängigkeit von den gezündeten Fanalen.

**5.** Decodierungsvorrichtung nach Anspruch 4, **dadurch gekennzeichnet, dass** die Zuordnungsmittel eine Decodierung mit maximaler Wahrscheinlichkeit einsetzen.

**6.** Decodierungsvorrichtung nach Anspruch 5, **dadurch gekennzeichnet, dass** sie Mittel zur lokalen Decodierung für jeden der Blöcke einsetzt, die im gezündeten Zustand mindestens ein Fanal, das am wahrscheinlichsten ist, in dem Block in Abhängigkeit von der entsprechenden zu decodierenden Untermeldung aktivieren,
und eine decodierte Untermeldung in Abhängigkeit von den zwischen den Fanalen im gezündeten Zustand aktivierten Verbindungen liefern.

**7.** Decodierungsvorrichtung nach Anspruch 6, **dadurch gekennzeichnet, dass** sie Mittel zur globalen Decodierung umfasst, die eine Funktion der Meldungsweitergabe unter Berücksichtigung der Einheit der Fanale im gezündeten Zustand sicherstellen.

**8.** Decodierungsvorrichtung nach einem der Ansprüche 6 und 7 **dadurch gekennzeichnet, dass** sie eine iterative Decodierung einsetzt, die mindestens zwei Iterationen der von den Mitteln zur lokalen Decodierung durchgeführten Bearbeitung sicherstellt.

**9.** Decodierungsvorrichtung nach einem der Ansprüche 3 bis 8, **dadurch gekennzeichnet, dass** die Verbindungsmittel Bearbeitungsneuronen einsetzen, die derart organisiert sind, dass sie den Maximalwert mindestens zweier am Eingang anliegender Werte bestimmen.

**10.** Decodierungsvorrichtung nach Anspruch 9, **dadurch gekennzeichnet, dass** die Bearbeitungsneuronen mindestens ein Basismodul umfassen, das von sechs Neuronen mit Nullschwelle und Ausgangswerten 0 oder 1 gebildet ist, umfassend:

- ein erstes Neuron, das einen ersten Wert A empfangen kann;
- ein zweites Neuron, das einen zweiten Wert B empfangen kann, wobei einer des ersten Werts A und zweiten Werts B positiv oder gleich Null ist;
- ein drittes Neuron, das mit dem ersten Neuron durch eine Verbindung mit Wichtung 0,5 und dem zweiten Neuron durch eine Verbindung mit Wichtung 0,5 verbunden ist;
- ein viertes Neuron, das mit dem ersten Neuron durch eine Verbindung mit Wichtung 0,5 und dem zweiten Neuron durch eine Verbindung mit Wichtung -0,5 verbunden ist;
- ein fünftes Neuron, das mit dem ersten Neuron durch eine Verbindung mit Wichtung -0,5 und dem zweiten Neuron durch eine Verbindung mit Wichtung 0,5 verbunden ist;
- ein sechstes Neuron, das mit dem dritten, vierten und fünften Neuron durch Verbindungen mit Wichtung 1 verbunden ist und den Maximalwert zwischen den Werten A und B liefert.

**11.** Decodierungsvorrichtung nach einem der Ansprüche 4 bis 10, **dadurch gekennzeichnet, dass** es in Form mindestens einer integrierten Schaltung ausgeführt ist.

**12.** Verfahren zum Einlernen von Meldungen, das ein neuronales Netzwerk einsetzt, das eine Menge von Neuronen, Fanale genannt, einsetzt, wobei die Fanale binäre Neuronen sind, die nur zwei Zustände, einen gezündeten und einen ungezündeten, annehmen können,
wobei die Fanale in Blöcken verteilt sind, jeweils umfassend eine vorbestimmte Anzahl von Fanalen,
und umfassend eine Einlernphase, mit den folgenden Schritten für eine einzulernende Meldung:

- einen Schritt des Aufteilens einer einzulernenden Meldung in B einzulernende Untermeldungen, wobei B größer oder gleich zwei ist,

wobei jeder Fanalblock der Bearbeitung einer der Untermeldungen zugeordnet ist,
wobei jedes Fanal einem spezifischen Aufscheinen der Untermeldung zugeordnet ist,

- einen Schritt der Aktivierung eines einzigen Fanals im gezündeten Zustand in jedem Block für eine einzulernende Untermeldung, wobei alle anderen Fanale des Blocks im ungezündeten Zustand sind;
- einen Schritt der Schaffung von Verbindungen zwischen Fanalen, die für jede einzulernende Meldung Verbindungen zwischen den gezündeten Fanalen jedes der Blöcke aktivieren, wobei die Verbindungen binäre Verbindungen sind, die nur einen verbundenen und einen unverbundenen Zustand annehmen können.

**13.** Einlernverfahren nach Anspruch 12, **dadurch gekennzeichnet, dass** in dem Aktivierungsschritt eine Verbindung zwischen zwei Fanalen mit dem Wert 1 diesen Wert behält.

**14.** Computerprogrammprodukt, das von einem Kommunikationsnetz herunterladbar und/oder auf einem von einem Computer lesbaren Träger gespeichert und/oder von einem Mikroprozessor ausführbar ist, umfassend Programmcodebefehle für die Ausführung des Einlernverfahrens nach mindestens einem der Ansprüche 12 und 13, wenn es auf einem Computer ausgeführt wird.

**15.** Verfahren zum Decodierung einer zu decodierenden Meldung mit Hilfe eines neuronalen Netzwerkes, das nach dem Einlernverfahren eines der Ansprüche 12 und 13 konfiguriert ist, umfassend die folgenden Schritte:

(a) Empfang einer zu decodierenden Meldung;
(b) Aufteilen der zu decodierenden Meldung in B zu decodierende Untermeldungen;
(c) Verbinden einer decodierten Meldung mit der zu decodierenden Meldung in Abhängigkeit von den gezündeten Fanalen entsprechend den zu decodierenden Untermeldungen.

**16.** Decodierungsverfahren nach Anspruch 15, **dadurch gekennzeichnet, dass** der Schritt (c) für jede der zu decodierenden Untermeldungen und für jeden entsprechenden Fanalblock die folgenden Unterschritte umfasst:

(c1) Initialisieren durch Zünden mindestens eines Fanals entsprechend der bearbeiteten Untermeldung und Löschen aller anderen Fanale des Blocks;
(c2) Suche nach mindestens einem Fanal, das am wahrscheinlichsten ist unter der Gesamtheit der Fanale des Blocks;

(c3) Aktivierung im gezündeten Zustand des mindestens einen Fanals, das am wahrscheinlichsten ist, und Löschen aller anderen Fanale des Blocks;
und einen Schritt der:
(c4) Bestimmung der decodierten Meldung entsprechend der zu decodierenden Meldung durch Kombination der von den Fanalen im gezündeten Zustand bezeichneten Untermeldungen.

17. Decodierungsverfahren nach Anspruch 16, **dadurch gekennzeichnet, dass** es einen Schritt:

(d) der Weitergabe der Meldungen zwischen den B Blöcken, wobei die Werte der Fanale für eine Wiedereinführung in Schritt (c2) angepasst werden, umfasst,
wobei die Schritte (c2) bis (c4) dann reiteriert werden.

18. Decodierungsverfahren nach Anspruch 17, **dadurch gekennzeichnet, dass** bei einer Reiteration der Schritt (c2) Informationen berücksichtigt, die von Schritt (c4) geliefert werden, und Informationen, die bei mindestens einer vorherigen Iteration berücksichtigt wurden.

19. Decodierungsverfahren nach Anspruch 18, **dadurch gekennzeichnet, dass** die Informationen, die bei mindestens einer vorherigen Iteration berücksichtigt wurden, mit Hilfe eines Speichereffektkoeffizienten $\gamma$ gewichtet werden.

20. Decodierungsverfahren nach einem der Ansprüche 17 bis 19, **dadurch gekennzeichnet, dass** in Schritt (c3) ein Fanal, das am wahrscheinlichsten ist, nicht aktiviert wird, wenn der Wert kleiner als eine vorbestimmte Schwelle $\sigma$ ist.

21. Decodierungsverfahren nach einem der Ansprüche 16 bis 20, **dadurch gekennzeichnet, dass** es für eine zu decodierende Meldung liefert:

- eine decodierte Meldung entsprechend der zu decodierenden Meldung, um eine assoziative Speicherfunktion zu gewährleisten; oder
- eine binäre Information, die angibt, ob die zu decodierende Meldung eine Meldung ist, die bereits vom neuronalen Netzwerk erfasst wurde, oder nicht, um eine Unterscheidungsfunktion sicherzustellen.

22. Computerprogrammprodukt, das von einem Kommunikationsnetz fernladbar und/oder auf einem von einem Computer lesbaren Träger gespeichert und/oder von einem Mikroprozessor ausführbar ist, umfassend Programmcodebefehle für die Ausführung des Decodierungsverfahrens nach mindestens einem der Ansprüche 15 bis 21, wenn es auf einem Computer ausgeführt wird.

**Claims**

1. Device for learning messages, implementing a neural network,
comprising a set of neurons, called beacons, said beacons being binary neurons capable of taking only two states, an "on" state and an "off" state,
said beacons being distributed into blocks each comprising a predetermined number of beacons,
and means for learning by said neural network, comprising:

- means for sub-dividing a message to be learned into B sub-messages to be learned, B being greater than or equal to two, each block of beacons being assigned to the processing of one of said sub-messages,

each beacon being associated with a specific occurrence of said sub-message,

- means for activating a single beacon in the "on" state in each block, for a sub-message to be learned, all the other beacons of said block being in the "off" state;
- means for creating connections between beacons, activating, for a message to be learned, connections between the "on" beacons of each of said blocks, said connections being binary connections, capable of taking only a connected state and a disconnected state.

2. Device for learning according to claim 1, **characterized in that** said messages have a length $k = B\kappa,$ where B is the number of blocks and $\kappa$ is the length of a sub-message, each block comprising $l = 2^{\kappa}$ beacons.

3. Device for learning according to any one of the claims 1 and 2, **characterized in that** it is made in the form of at least one integrated circuit.

4. Device for decoding a message to be decoded, by means of a neural network configured by means of the device for learning according to any one of the claims 1 to 3, comprising:

- means for sub-dividing the message to be decoded into B sub-messages to be decoded;
- means for turning "on" the beacons associated respectively with said sub-messages to be decoded, in the corresponding blocks;
- means for associating, with said message to be decoded, a decoded message as a function of said "on" beacons.

5. Device for decoding according to claim 4, **characterized in that** said means for associating implement a maximum likelihood decoding.

6. Device for decoding according to claim 5, **characterized in that** it comprises means of local decoding, for each of said blocks, activating in the "on" state at least one beacon that is the most likely beacon, in said block, as a function of the corresponding sub-message to be decoded, and delivering a decoded sub-message as a function of the connections activated between said beacons in the "on" state.

7. Device for decoding according to claim 6, **characterized in that** it comprises overall decoding means fulfilling a message-passing function in taking account of the set of beacons in the "on" state.

8. Device according to any one of the claims 6 and 7, **characterized in that** it implements an iterative decoding performing at least two iterations of the processing done by said local decoding means.

9. Device according to any one of the claims 3 to 8, **characterized in that** said means for associating implement processing neurons, organized so as to determine the maximum value of at least two values submitted at input.

10. Device for decoding according to claim 9, **characterized in that** said processing neurons comprise at least one basic module constituted by six zero-threshold neurons and with output values 0 or 1, comprising:

- a first neuron capable of receiving a first value A;
- a second neuron capable of receiving a second value B, at least one among said first value A and second value B being positive or zero;
- a third neuron, connected to the first neuron by a connection with a weight of 0.5 and to the second neuron by a weight of 0.5;
- a fourth neuron connected to the first neuron by a connection with a weight of 0.5 and to the second neuron by a connection with a weight of -0.5;
- a fifth neuron connected to the first neuron by a connection with a weight of -0.5 and to the second neuron by a connection with a weight of 0.5;
- a sixth neuron connected to the third, fourth and fifth neurons by connections with a weight of 1 and delivering the maximum value between the values A and B.

11. Device according to any one of the claims 4 to 10, **characterized in that** it is made in the form of at least one integrated circuit.

12. Method for learning messages by a neural network implementing a set of neurons, called beacons, said beacons being binary beacons, capable of taking only two states, an "on" state and an "off" state, said beacons being distributed into blocks each comprising a predetermined number of beacons, and comprising a phase of learning comprising the following steps for a message to be learned:

- a step for sub-dividing a message to be learned into B sub-messages to be learned, B being greater than or equal to two, each block of beacons being allocated to the processing of one of said sub-messages,

each beacon being associated with a specific occurrence of said sub-message;

- a step for activating a single beacon in the "on" state in each block, for a sub-message to be learned, all the other beacons of said block being in the "off" state;
- a step for creating connections between beacons, activating, for a message to be learned, connections between the "on" beacons of each of said blocks, said connections being binary connections, capable of taking only a connected state and a disconnected state.

13. Method for learning according to claim 12 **characterized in that**, in said step for activating, a connection between two beacons possessing the value 1 keeps this value.

14. Computer program product downloadable from a communications network and/or stored on a computer-readable carrier and/or executable by a microprocessor, comprising program code instructions for the execution of this method for learning according to at least one of the claims 12 and 13 when it is executed on a computer.

15. Method for decoding a message to be decoded by means of a neural network configured according to the method for learning according to any one of the claims 12 and 13, comprising the following steps:

(a) receiving a message to be decoded;
(b) sub-dividing said message to be decoded into B sub-messages to be decoded;
(c) associating, with said message to be decoded, a decoded message as a function of the "on" beacons corresponding to said sub-messages to be decoded.

16. Method for decoding according to claim 15, **characterized in that** said step (c) comprises, for each of said sub-messages to be decoded, and for each corresponding block of beacons, the sub-steps of:

(c1) initializing, by activating in the "on" state at least one beacon corresponding to the processed sub-message, and extinguishing all the other beacons of said block;
(c2) searching for at least one most likely beacon from among the set of beacons of said block;
(c3) activating, in the "on" state, said at least one most likely beacon, and extinguishing of all the other beacons of said block;
and a step of:
(c4) determining the decoded message corresponding to the message to be decoded, by combination of the sub-messages designated by the beacons in the "on" state.

17. Method for decoding according to claim 16, **characterized in that** it comprises a step:

(d) of passing messages between the B blocks, adapting the values of the beacons for a reinsertion at the step (c2),

said steps (c2) to (c4) being then reiterated.

18. Method for decoding according to claim 17, **characterized in that**, during a reiteration, the step (c2) can take account of the pieces of information delivered by the step (c4) and the pieces of information taken into account during at least one preceding iteration.

19. Method for decoding according to claim 18, **characterized in that** said pieces of information taken into account during at least one preceding iteration can be weighted by means of a memory effect coefficient y.

20. Method for decoding according to any one of the claims 17 to 19, **characterized in that**, in the step (c3), a most likely beacon is not activated if its value is below a predetermined threshold σ.

21. Method for decoding according to any one of the claims 16 to 20, **characterized in that**, for a message to be decoded, it delivers:

- a decoded message corresponding to the message to be decoded so as to provide for an associative memory function; or
- a piece of binary information indicating whether or not the message to be decoded is a message already learned by said neural network so as to provide a discriminating function.

**22.** Computer program product downloadable from a communications network and/or stored in a computer-readable carrier and/or executable by a microprocessor, comprising program code instructions for the execution of the decoding method according to at least one of the claims 15 to 21 when it is executed on a computer.

EP 2 609 545 B1

$d_i(-1,+1)$

$w_{ij}$

Fig. 1

Fig. 2

bloc de
longueur $l$
(indice $j$)

message partiel
de longueur $\kappa$
(indice $i$)

Fig. 3

25

$\{x_i\}$ $(i=1...6)$

$\{y_i\}$

$\{u_j\}$ $(j=1...4)$

Fig. 4

A          B

poids +/- 0,5

53

poids 1

54

55

56

max$(A, B)$

Fig. 5

$z_1$  $z_2$      $z_3$  $z_4$      $z_{l-3}$  $z_{l-2}$      $z_{l-1}$  $z_l$

1

Fig. 6

Fig. 7

Fig. 8

Nombre de messages (*M*)

Fig. 9

Nombre de messages (*M*)

Fig. 10

Nombre de messages (*M*)

Fig. 11

Fig. 12

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **JOHN J. HOPFIELD.** Hopfield network. *Scholarpedia,* 2007, vol. 2 (5), 1977
- **R. J. MCELIECE ; E. C. POSNER ; E. R. RODEMICH ; S. S. VENKATESH.** The capacity of the Hopfield associative memory. *IEEE Trans. Inform. Theory,* 1987, vol. IT-33, 461-482
- **C. BERROU ; A. GLAVIEUX ; P. THITIMAJSHIMA.** Near Shannon limit error-correcting coding and decoding: turbo-codes. *Proc. of IEEE ICC '93,* Mai 1993, 1064-1070

- **SYLVIE KEROUÉDAN ; CLAUDE BERROU.** *Scholarpedia,* 2010, vol. 5 (4), 6496
- **R. J. MCELIECE ; D. J. C. MACKAY ; J.-F. CHENG.** Turbo decoding as an instance of Pearl's 'belief propagation' algorithm. *IEEE Journal on SelectedAreas in Commun,* Février 1998, vol. 16 (2), 140-152
- **R. G. GALLAGER.** Low-density parity-check codes. *IRE Trans. Inform. Theory,* Janvier 1962, vol. IT-8, 21-28